Europäisches Patentamt

European Patent Office

Office européen des brevets

(11) Veröffentlichungsnummer: **0 230 261 B1**

# EUROPÄISCHE PATENTSCHRIFT

(45) Veröffentlichungstag der Patentschrift: **04.12.91**

(51) Int. Cl.5: **A01D 41/12, A01F 12/40**

(21) Anmeldenummer: **87100401.6**

(22) Anmeldetag: **14.01.87**

(54) **Anbauvorrichtung für Mähdrescher zum Verteilen von Spreu und Kurzstroh.**

(30) Priorität: 16.01.86 DE 3601152
30.05.86 DE 3618105

(43) Veröffentlichungstag der Anmeldung:
**29.07.87 Patentblatt 87/31**

(45) Bekanntmachung des Hinweises auf die
Patenterteilung:
**04.12.91 Patentblatt 91/49**

(84) Benannte Vertragsstaaten:
**AT BE FR GB IT SE**

(56) Entgegenhaltungen:
DE-A- 2 837 814        DE-B- 1 079 378
FR-A- 668 039          GB-A- 2 096 453
US-A- 1 946 656        US-A- 3 276 451
US-A- 3 370 728        US-A- 4 591 102

(73) Patentinhaber: **BISO Bitter GmbH. & Co.KG.
Ladestrasse 3 - 9
W-4986 Rödinghausen-Bruchmühlen(DE)**

(72) Erfinder: **Walkenhorst, Heinrich, Dipl.-Ing.
Am Pfarrgarten 10
W-4520 Melle 8,(DE)**
Erfinder: **Scharf, Alois
Kohneweg
W-4520 Melle 8,(DE)**
Erfinder: **Bullerdiek, Jürgen, Dipl.-Ing.
Aringer Kirchweg 2
W-4516 Bissendorf 1,(DE)**

(74) Vertreter: **Gossel, Hans K., Dipl.-Ing. Lorenz-
Seidler-Gossel et al
Widenmayerstrasse 23
W-8000 München 22(DE)**

## Beschreibung

Die Erfindung betrifft einen Mähdrescher nach dem Oberbegriff der Ansprüche 1 und 4.

Mähdrescher üblicher Konstuktion weisen unter den Strohschüttlern zu schwingenden Siebkästen zusammengefaßte Kurzstroh- und Körnersiebe auf, über die ein Luftstrom entgegen der Mähdrescher-Fahrtrichtung geleitet wird, der die Spreu und das Kurzstroh mitnimmt, sodaß diese auf den Acker fallen. Da Kurzstroh-, Spreu- und Kaffteile oft ein Viertel des anfallenden Strohs ausmachen und in der Regel Mähdrescher über mehrere Jahre mit gleicher Schnittbreite in der gleichen Spur das Getreide mähen, wird dem Ackerboden zustäzlich zu den Stoppeln immer wieder in gleichem Abstand ein Streifen Kurzstroh, Spreu und Kaff zugeführt, der bei der Verwendung eines Strohhäckslers zusätzlich noch mit gehäckseltem Stroh überstreut wird. Diese streifenweise Zuführung von Spreu und Kurzstroh führt zu unerwünschten Inhomogenitäten der Bodenstruktur.

Aufgabe der Erfindung ist es, einen Mähdrescher mit einer Anbauvorrichtung der eingangs angegebenen Art zu schaffen, der auch die anfallende Spreu und das Kurzstroh möglichst gleichmäßig über die Schnittbreite des Mähdreschers verteilt, sodaß der Boden gleichmäßig mit Stroh und Spreuteilen zur Humusbildung versorgt wird.

Erfindungsgemäß wird diese Aufgabe nach einem ersten Vorschlag durch die kennzeichnenden Merkmale des Anspruchs 1 gelöst. Die Spreu und das Kurzstroh werden mit nur einem endlosen Zugmittel nach beiden Seiten verteilt, sodaß eine weitgehend gleichmäßige Verteilung über die Schnittbereiche des Mähdreschers möglich ist. Hinter dem Zugmittel und/oder den Schaufeln kann ein Anschlagblech, dessen unterer Teil klappbar ausgeführt sein kann, angebracht werden, um zu verhindern, daß das Spreu-Luft-Gemisch direkt in Mähdrescher-Fahrtrichtung nach hinten geblasen wird. Da die Vorrichtung nur ein endloses flexibles Zugmittel enthält und die erforderliche Verteilung der Spreu und des Kurzstrohs jeweils auf das Ober- und Untertrum durch Leitbleche erfolgt, kann die Anbauvorrichtung in der erfolgreichen Weise gedrungen und klein ausgebildet und kostengünstig hergestellt werden.

Eine vorteilhafte Weiterbildung ist Gegenstand des Unteranspruchs 2. Die Anbauvorrichtung wird durch ein Anschlagblech abgeschirmt, das sich in Mähdrescher-Fahrtrichtung hinter dem Zugmittel und/oder hinter den Schaufeln befindet. Der untere Teil des Anschlagsblech kann klappbar ausgeführt sein.

Nach einem zweiten Vorschlag wird die Aufgabe durch die kennzeichnenden Merkmale des Anspruchs 4 gelöst. Diese zweite Ausführungsform ermöglicht die Verteilung der Spreu und des Kurzstrohs in einer Ebene, benötigt hierfür aber zwei nebeneinander angeordnete endlose Zugmittel, die in entgegengesetzten Richtungen umlaufen müssen.

Die äußeren Rollen der Zugmitteltriebe können zur Variation der Wurfweite um den Mittelpunkt der jeweiligen inneren Rolle schwenkbar gelagert werden.

Zweckmäßigerweise sind die Leitbleche an Trägern oder Tragarmen befestigt, die um querliegende horizontale Achsen schwenkbar und feststellbar gelagert sind. Durch Verstellung der Leitbleche kann der mit der Spreu und dem Kurzstroh beladene Strom in der günstigsten Weise den Schaufeln zugeführt werden. Weiterhin läßt sich durch abschnittweises Einstellen der Leitbleche die jeweils ausgenutzte Länge des Ober- oder Untertrums des Förderbandes o. dgl. bestimmen.

Zweckmäßigerweise sind die vorderen Endbereiche der Leitbleche an den freien den Sieben zugewandten Enden der Tragarme um zu den Stirnkanten der Leitbleche parallele Achsen schwenkbar gelagert, so daß eine weitere Einstellmöglichkeit geschaffen ist. An den Tragarmen können jeweils zwei diese zwischen sich einfassende Leitbleche schwenkbar gelagert sein, deren äußere Leitflächen parallel oder spitzwinkelig zueinander verlaufen. Zweckmäßigerweise sind auch die Tragarme in ihrer Länge verstellbar ausgebildet. Zur Längenverstellung können die Tragarme aus teleskopischen und miteinander verspannbaren Rohren bestehen oder andere technische Konstruktionen beliebiger Ausführung, die eine Längsverstellung ermöglichen, eingesetzt werden. Zweckmäßigerweise sind die Schwenkpunkte der Tragarme in vertikaler und horizontaler Richtung verstellbar.

Sind zwei nebeneinander angeordnete gegenläufige endlose, mit Verteilorganen versehene Förderbänder od.dgl. vorgesehen, können diese unterschiedliche Längen aufweisen, um Hanglagen oder unterschiedliche Windeinflüsse auszugleichen.

Um die Spreu weiter auswerfen und besser verteilen zu können, können auf dem Zugmittel Wurfschaufeln angebracht sein. Diese Wurfschaufeln können eine Wurfbewegung ausführen, die bewirkt, daß die Spreu weiter ausgeworfen wird. Weiterhin wird durch die Wurfbewegung bewirkt, daß die Spreu die Wurfschaufeln bereits verlassen hat, bevor diese über den Krümmungsradius der Riemenscheibe oder Umlenkrolle umgelenkt werden und die Spreu nach unten zum Stoppelfeld hin in einem Schwad abwerfen können. Die Wurfschaufeln können besondere Formen aufweisen, um ein günstiges Aufnehmen, Abwerfen und Verteilen zu erreichen.

Vorteilhafte Weiterbildungen der Erfindung sind in den Unteransprüchen beschrieben.

Ausführungsbeispiele der Erfindung werden nachstehend anhand der Zeichnung näher erläutert. In dieser zeigen

Fig. 1
eine Seitenansicht der Verteilervorrichtung mit nur einem Förderband, teilweise geschnitten,

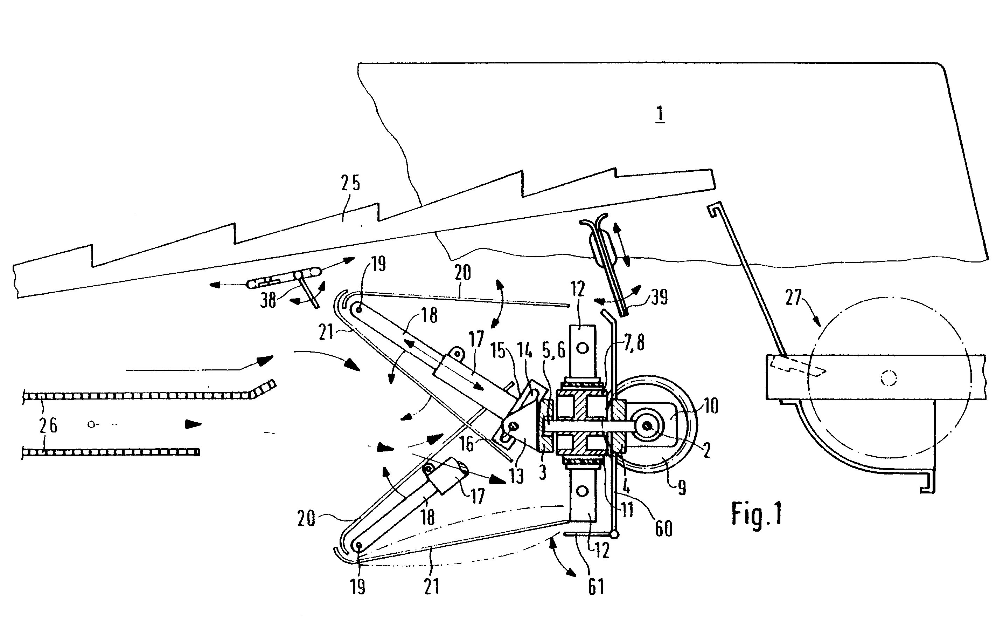

Fig. 2
eine Vorderansicht der Vorrichtung nach Fig. 1, von den Sieben her gesehen,

Fig. 3
eine Vorderansicht einer zweiten Ausführungsform der Vorrichtung mit zwei nebeneinander angeordneten Förderbändern in schematischer Darstellung,

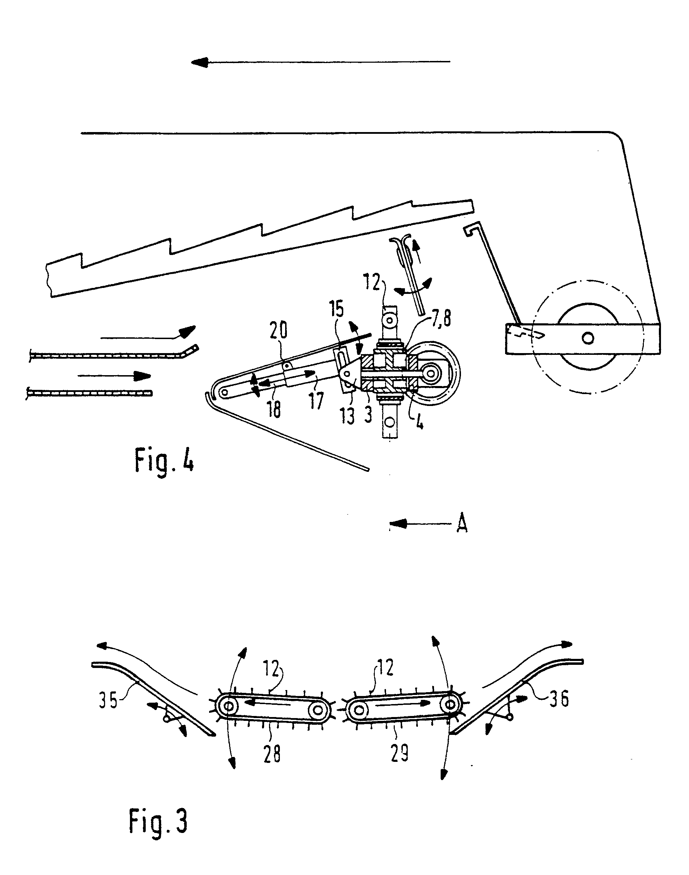

Fig. 4
eine Seitenansicht der Vorrichtung nach Fig. 3, teilweise im Schnitt,

Fig. 5
eine Rückansicht der Vorrichtung nach Fig. 1 in schematischer Darstellung mit fünf abschnittweise einstellbaren Leitblechen, von denen zwei den Luftstrom dem Untertrum und drei dem Obertrum zuführen,

Fig. 6
eine der Fig. 3 entsprechende Darstellung zweier nebeneinander angeordneter Förderbänder mit unterschiedlichen Längen,

Fig. 7a bis 7c
ein Förderband mit auf diesem befestigten Schaufeln im Querschnitt, im Längsschnitt und in Draufsicht,

Fig. 8a und 8b
einen Keilriemen mit auf diesem befestigten Schaufeln im Querschnitt und in Seitenansicht,

Fig. 9a und 9b
eine Rollenkette mit auf dieser befestigten Schaufeln im Querschnitt und in Draufsicht,

Fig. 10
ein Seil im Querschnitt mit auf diesem befestigten Schaufeln,

Fig. 11
eine erste Ausführungsform der Wurfschaufeln in einer Seitenansicht und in einer Draufsicht,

Fig. 12
eine weitere Ausführungsform einer Wurfschaufel in einer Seitenansicht und

Fig. 13
eine weitere Ausführungsform einer Wurfschaufel in einer Seitenansicht.

Fig. 14a u.14 b
mehrere Schaufelvariationen.

In den Seitenwandungen der Haube 1 (Fig.1) eines Mähdreschers oder in mit dem Mähdrescherfahrgestell verbunden seitlichen Trägern ist in nicht dargestellten Führungen eine Querachse 2 gehaltert, die in den Führungen in vertikaler Richtung und in horizontaler Richtung verstellbar und schwenkbar und in den gewünschten Stellungen und Schwenklagen feststellbar ist. Mit der Querachse 2 ist über nicht dargestellte Tragstücke ein Rahmen verbunden, der zwei zueinander parallele Querholme 3, 4, aufweist. In den seitlichen Endbereichen des Rahmens 3, 4, sind über horizontale, in Fahrtrichtung weisende Achsen 5, 6, Antriebs- und Umlenkrollen 7, 8 gelagert, von denen in Fig. 1 nur eine im Schnitt dargestellt ist. Die Antriebsrolle 8 wird über die Riemenscheibe 9 und ein zwischengeschaltetes Winkelgetriebe 10 von einem Keilriemen angetrieben, der in nicht dargestellter Weise über eine von dem Mähdrescher-Hauptantrieb angetriebene Antriebs-Keilriemenscheibe angetrieben ist.

Über die Antriebs- und Umlenkrollen 7,8 läuft das endlose Förderband 11, auf dem nach außen weisend, in gleichmäßigen Abständen Schaufeln 12 befestigt sind. Hinter dem Zugmitteltrieb bzw. den Schaufeln etwa im Bereich des Holmes 4 kann ein Anschlagblech 6o, dessen unterer Teil 61 klappbar ausgeführt ist, angebracht werden. Mit dem Holm 3 sind paarweise Lagerböcke bildende, etwa dreieckige Laschen 13 verbunden zwischen denen mit Langlächern 14 versehene Tragstücke 15 gehaltert sind. Die Langlöcher 14 durchsetzen in den Laschen 13 angeordnete Klemmbolzen 1o, auf denen die Tragstücke 15 schwenkbar und längsverschieblich angeordnet sind. Durch entsprechendes Lokkern und Festziehen der Bolzenklemmverbindungen 16 lassen sich die Tragstücke 15 in unterschiedlichen Lagen und Schwenkstellungen festziehen. Die Tragstücke 15 sind mit Rohrstücken 17 verbunden, in denen Rohrstücke 18 teleskopisch und in unterschiedlichen Auszugsstellungen festklemmbar geführt sind.

Die äußeren Rohrstücke 18 sind mit Schwenkachsen 19 versehen, um die Leitbleche 20, 21 schwenkbar und in unterschiedlichen Schwenklagen feststellbar gelagert sind. Die Leitbleche 20, 21 stehen in der dargestellten Weise spitzwinkelig zueinander und können unabhängig voneinander oder aber gemeinsam relativ zu den durch die Rohrstükke 17, 18 gebildeten Haltearme schwenkbar sein. Die Leitfleche 20, 21 können, wie aus dem unteren Teil der Fig. 1 ersichtlich, konvex oder konkav um horizontale Querachsen gekrümmt sein.

Die Verteilvorrichtung mit den Leitblechen 20, 21 ist unterhalb der Schüttler 25 zwischen den Sieben 26 und dem Anbauhäcksler 27 angeordnet.

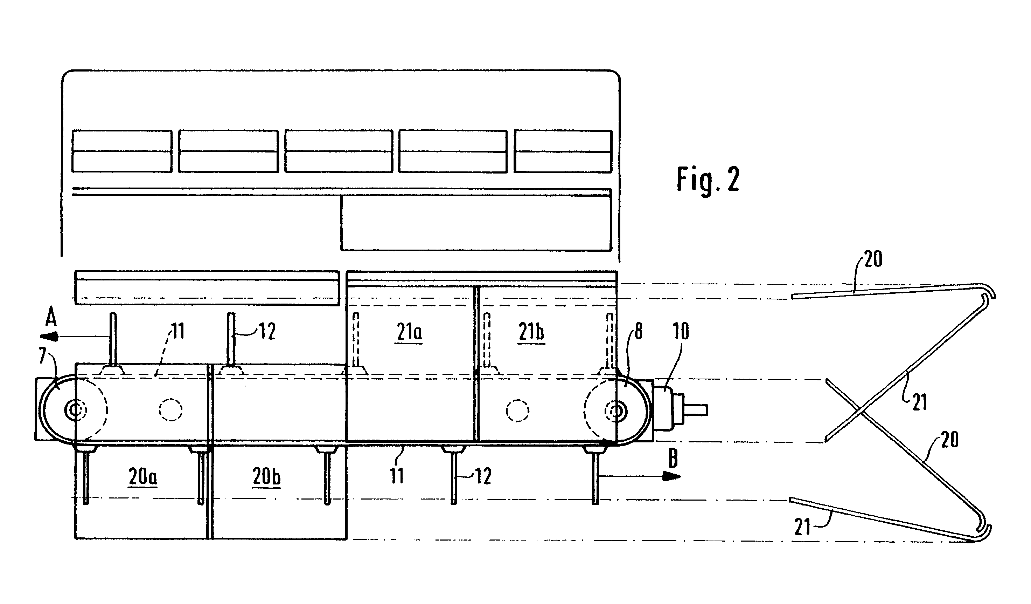

Wie aus Fig. 2 ersichtlich ist, laufen die Schaufeln 12 des Obertrums in Richtung des Pfeils A und die Schaufeln des Untertrums in Richtung des Pfeils B. In Fig. 2 sind die Leitbleche, wie aus dem unteren Teil der Fig. 1 ersichtlich, nach unten geschwenkt, so daß der mit der Spreu und dem Kurzstroh beladene Luftstrom über die Leitblechabschnitte 20a und 20b den Schaufeln 12 des Obertrums zugeführt wird. Die Leitblechabschnitte 21a und 21b sind auf der rechten Seite der Fig. 2, wie aus dem oberen Teil der Fig. 1 ersichtlich, nach oben geschwenkt, so daß der Luftstrom den Schaufeln 12 des Untertrums des Förderbandes 11 zugeführt wird.

Zur Verdeutlichung ist rechts in Fig. 2 die Stellung der Leitbleche in Seitenansicht nochmals dargestellt.

Bei dem Ausführungsbeispiel nach Fig. 3 sind in etwa einer Ebene zwei gegenläufige mit Schaufeln besetzte Förderbänder 28, 29 vorgesehen. Die Leitbleche 20 sind in der aus Fig. 4 ersicht lichen Weise nach unten geschwenkt, so daß der von den Sieben kommende Luftstrom über die Leitbleche 20 den Schaufeln 12 jeweils dem Obertrum beider Förderbänder 28, 29 zugeführt wird. Die äußeren Rollen der Zugmitteltriebe können zur Variation der Wurfweite um dem Mittelpunkt der jeweiligen inneren Rolle schwenkbar gelagert werden.

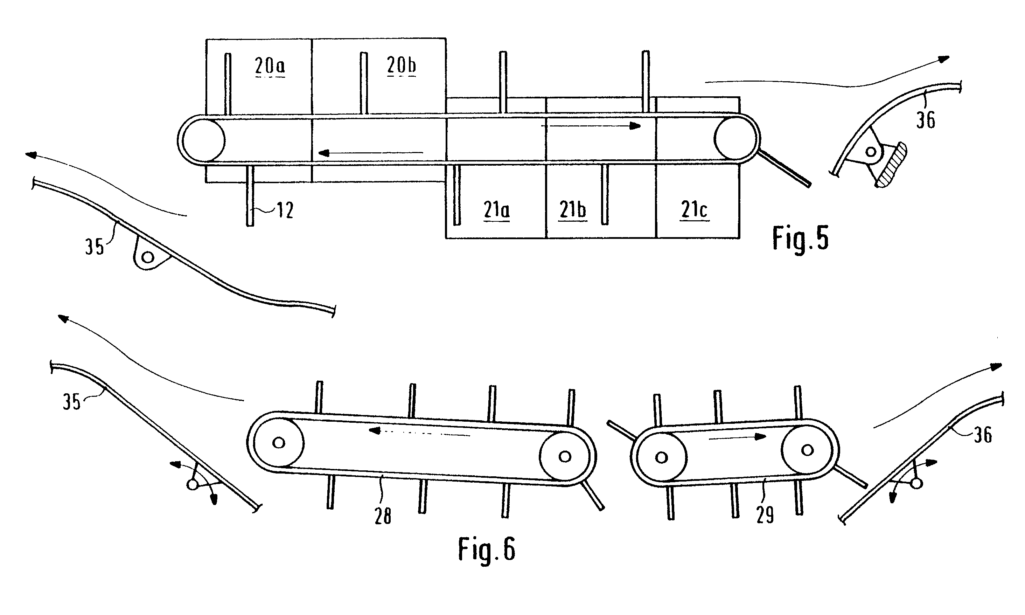

Bei dem Ausführungsbeispiel nach Fig. 5 sind die Leitbleche in fünf Abschnitte unterteilt, von denen jeweils zwei den Luftstrom den Schaufeln 12 des Untertrums und jeweils 3 den Schaufeln 12 des Obertrums zuführen.

Bei dem Ausführungsbeispiel nach Fig. 6 sind die gegenläufig umlaufenden Förderbänder 28, 29 unterschiedlich lang ausgeführt.

Seitlich der Förderbänder können einstellbare Leitbleche 35, 36 vorgesehen sein (siehe Fig. 3, 5 und 6).

Zusätzlich sind vor den Leitblechen 20, 21 oberhalb der Siebe 26 einstellbare Luftleitklappen 38 vorgesehen. Weiterhin sind zur Steuerung des Luftstroms unterhalb des Strohschüttlers 25 hinter den Förderbändern ausziehbare und einschiebbare sowie verschwenkbare Luftleitbleche 39 (Fig. 1).

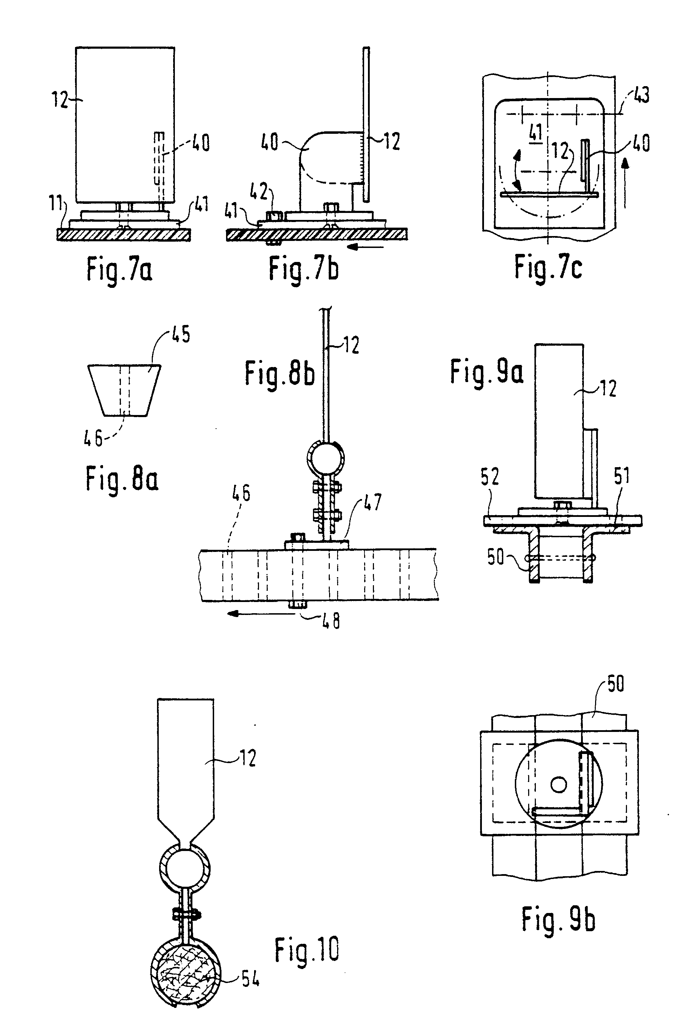

Die Schaufeln 12 (Fig. 7a-7c) können über Tragstücke 40 mit dem Treibriemen 11 verbunden sein. Die Tragstücke 40 sind über Grundplatten 41 durch auf einer Querlinie 43 angeordnete Schraubbolzen 42 mit dem treibriemenförmigen Förderband 11 verbunden, so daß die die Schaufeln 20 tragenden Grundplatten 41 problemlos über die Antriebs- und Unlenkrollen laufen können. Die Schaufeln in den Fig. 7 bis 10 sind einstellbar und schwenkbar angeordnet.

Bei dem Ausführungsbeispiel nach den Fig. 8a und 8b besteht das über die Antriebs- und Umlenkrollen laufende Zugmittel aus einem Keilriemen 45, der mit mittigen Bohrungen 46 versehen ist, mit denen die Grundplatte 47 durch Schraubbolzen 48 verschraubt ist, die die Schaufeln 12 trägt.

Bei dem Ausführungsbeispiel nach den Fig. 9a und 9b besteht das Zugmittel aus einer Rollenkette 45, die mit seitlichen Laschen 51 versehen ist, die mit den die Schaufeln 12 tragenden Grundplatten 52 verschraubt sind.

Bei dem Ausführungsbeispiel nach Fig. 1o besteht das Zugmittel aus einem Seil 54 oder Rundriemen, auf das in der dargestellten Weise die Schaufeln 12 aufgeklemmt sind.

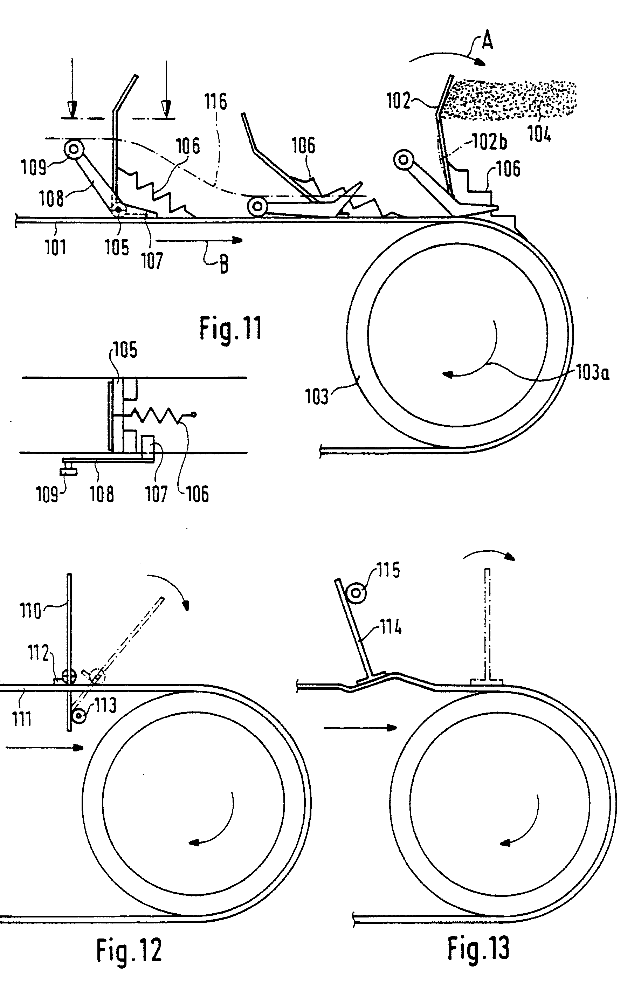

In Fig. 11 ist die Wurfschaufel 1o2 auf dem Band 1o1 um ein Scharnier 1o5 schwenkbar gelagert. Das Scharnier 1o5 ist fest mit dem Band 1o1 verbunden. Das Band 1o1 läuft um die Riemenscheibe 1o3 in Richtung des Pfeiles 1o3a. Mit der Wurfschaufel 1o2 ist der Anschlag 1o7 und der Halter 1o8 fest verbunden. Am Ende des Halters 1o8 befindet sich eine drehbar gelagerte Rolle 1o9. Die Zugfeder 1o6 zieht die Wurfschaufel 1o2 mit dem Anschlag 1o7 gegen das Band 1o1, so daß die Wurfschaufel 1o2 in senkrechter Stellung steht. Bei der Bewegung des Bandes 1o1 in Pfeilrichtung B durchläuft die Rolle 1o9 die neben dem Band 1o1 liegende Kurvenbahn 116. Die Rolle 1o9 folgt der Kurvenbahn 116 und dreht dadurch den Halter 1o8 und die Schaufel 1o2 nach links und nach unten, also in Bewegungsrichtung nach hinten. Die Feder 1o6 wird dadurch gespannt, so daß am Ende der Kurvenbahn 116 die Schaufel vorschnellt und die Spreu 1o4 mit erhöter Geschwindigkeit in waagerechter Richtung bzw. in annähernd waagerechter Richtung abwirft (siehe Pfeil A). Dieser Vorgang wiederholt sich für jede Wurfschaufel bei jedem Umlauf. Die Wurfschaufeln 1o2 können gerade oder konkav oder konvex gebogen oder abgekantet sein. Statt einer Zugfeder kann auch eine gewundene Biegefeder verwendet werden. Die Kurvenbahn ist so gestaltet, daß eine stoßfreie und ruckfreie Bewegung entsteht.

In Fig. 12 ist die Wurfschaufel 11o ebenfalls schwenkbar angeordnet. Der Anschlag 112 hält sie zunächt in senkrechter Stellung.

Beim Überfahren der unterhalb des Bandes angeordneten Rolle 113 dreht sich die Wurfschaufel und wirft die Spreu in Laufrichtung nach vorne beschleunigt ab. Zur Veränderung des Abwurfes kann die Rolle 113 in der Höhe verschiebbar angeordnet werden.

In Fig. 13 hat die Wurfschaufel 114 einen Fuß, der mit dem Band fest verbunden ist. Der Fuß kann mit der Wurfschaufel 114 fest verschweißt oder in anderer Weise fest verbunden sein. Beim Unterlaufen der oberhalb des Bandes angeordneten gestellfesten Rolle 115 wird das Band elastisch verformt. Dadurch weicht die Schaufel nach hinten aus, schnellt anschließend vor und wirft die Spreu ab. Die Rolle 115 kann höhenverstellbar ausgebildet sein.

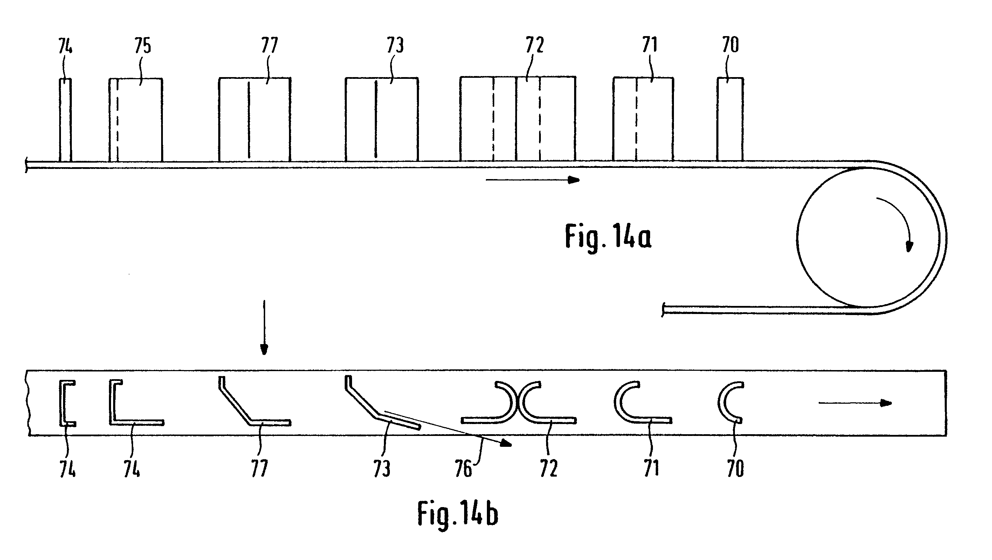

Unabhängig von den Ausführungen in Fig. 1 - 13 können die Wurfschaufeln halbkreisförmig (7o), halbkreisförmig mit unterschiedlich langen Schenkeln vorn und hinten (71), doppelhalbkreisförmig, doppelhalbkreisförmig mit unterschiedlich langen Schenkeln (72), gekantet (73, 77), U-förmig (74), U-förmig mit unterschiedlich langen Schenkeln (75) oder doppel-U-förmig nach Fig. 14a und 14b gestaltet sein. Die Doppelanordnung (z.B. 72) der Schaufeln macht die Spreuverteilung von der Bewegungsrichtung unabhängig. Bei der Variante nach Position 73 wird das Spreu-Luft-Gemisch zusätzlich zur Seite umgelenkt (Pfeil 76).

**Patentansprüche**

1.  Mähdrescher mit Kurzstroh- und Körnersieben (26) oder Kurzstroh- und Körnersieben sowie einem Strohschüttler (25) und mit einer Anbauvorrichtung zum Verteilen der von den Kurzstroh- und Körnersieben (26) abgeblasenen Spreu und des Kurzstrohs, die ein quer zur Mähdrescher-Fahrtrichtung angeordnetes, über Antriebs- und Umlenkrollen (7, 8) umlaufbares endloses flexibles Zugmittel (11) aufweist, das mit etwa senkrecht auf diesem stehenden, nach außen weisenden, im Abstand voneinander angeordneten Schaufeln (12) versehen ist, die fest oder lösbar mit dem Zugmittel (11) verbunden sind,

    dadurch gekennzeichnet,

    daß der die Antriebs- und Umlenkrollen (7, 8) lagernde Rahmen (3, 4) in Mähdrescher-Fahrtrichtung hinter den Kurzstroh- und Körnersieben (26) unterhalb des Strohschüttlers (25) - wenn vorhanden - angeordnet ist und daß über die Länge des endlosen flexiblen Zugmittels (11) verteilt zwischen diesem und den Kurzstroh- und Körnersieben (26) nebeneinander mehrere einstellbare Luftleitbleche (20, 21) angeordnet sind, mit denen der mit der Spreu und dem Kurzstroh beladene Luftstrom auf einer Seite der Anbauvorrichtung den Schaufeln (12) des Obertrums und auf der anderen Seite den Schaufeln (12) des Untertrums des Zugmittels (11) zuführbar ist.

2.  Mähdrescher nach Anspruch 1, dadurch gekennzeichnet, daß die Anbauvorrichtung durch ein Anschlagblech (60) in Mähdrescher-Fahrtrichtung hinter dem Zugmittel (11) und/oder den Schaufeln (12) abschirmbar ist.

3.  Mähdrescher nach Anspruch 2, dadurch gekennzeichnet, daß der untere Teil (61) des Anschlagblechs (60) klappbar ausgeführt ist.

4.  Mähdrescher nach dem Oberbegriff des Anspruchs 1,

    dadurch gekennzeichnet,

    daß in etwa einer Ebene zwei jeweils um Antriebs- und Umlenkrollen in entgegengesetzte Richtungen umlaufbare, mit Schaufeln (12) versehene flexible Zugmittel (28, 29) vorgesehen sind und daß über die Länge beider endlosen Zugmittel (28, 29) zwischen diesen und den Sieben (26) ein oder mehrere einstellbare Luftleitbleche (20) angeordnet sind, mit denen der mit Spreu und dem Kurzstroh beladenen Luftstrom den Schaufeln (12) jeweils nur den oberen oder dem unteren Trum der endlosen Zugmittel (28, 29) zuführbar ist.

5.  Mähdrescher nach Anspruch 4, dadurch gekennzeichnet, daß der Achsabstand der Antriebs- und der Umlenkrollen der beiden endlosen Zugmittel (28, 29) unterschiedlich groß ist.

6.  Mähdrescher nach Anspruch 4 oder 5, dadurch gekennzeichnet, daß die äußeren Rollen um den Mittelpunkt der zugehörigen inneren Rollen schwenkbar gelagert sind.

7.  Mähdrescher nach einem der Ansprüche 4 bis 6, dadurch gekennzeichnet, daß in Mähdrescher-Fahrtrichtung seitlich von den Zugmitteln (28, 29) zwei verstellbare Luftleitklappen (35, 36) vorgesehen sind.

8.  Mähdrescher nach einem der vorhergehenden Ansprüche, dadurch gekennzeichnet, daß die Luftleitbleche (20, 21) an Trägern oder Tragarmen (17, 18) befestigt sind, die um querliegende horizontale Achsen (16) schwenkbar und feststellbar gelagert sind, daß die vorderen Endbereiche der Luftleitbleche (20, 21) an den freien, den Kurzstroh- und Körnersieben (26) zugewandten Enden der Tragarme (17, 18) um zu den Stirnkanten der Luftleitbleche parallele Achsen (19) schwenkbar gelagert sind, und daß an den Tragarmen (17, 18) jeweils zwei diese zwischen sich einfassende Luftleitbleche (20, 21) schwenkbar gelagert sind, deren äußere Leitflächen parallel oder spitzwinklig zueinander laufen.

9.  Mähdrescher nach einem der vorhergehenden Ansprüche, dadurch gekennzeichnet, daß die Tragarme (17, 18) in ihrer Länge verstellbar ausgebildet sind, daß die Tragarme aus teleskopischen und miteinander verspannbaren Rohren (17, 18) bestehen oder sonstigen technischen Bauelementen, die eine Längsverschiebung ermöglichen, und daß die Schwenkpunkte (16) der Tragarme (17, 18) in vertikaler und horizontaler Richtung verstellbar sind.

10. Mähdrescher nach einem der vorhergehenden Ansprüche, dadurch gekennzeichnet, daß die Tragarme (17, 18) am Rahmen (3, 4) des endlosen Zugmittels (11) befestigt sind.

11. Mähdrescher nach einem der vorhergehenden Ansprüche, dadurch gekennzeichnet, daß auf dem Zugmittel (101) Wurfschaufeln (102) angebracht sind.

12. Mähdrescher nach Anspruch 11, dadurch gekennzeichnet, daß die Wurfschaufeln (102) in an dem Zugmittel befestigten Scharnieren (105) und/oder um eine oder mehrere Achsen drehbar oder in einem Kugelgelenk stufenlos drehbar gelagert sind.

13. Mähdrescher nach Anspruch 11 oder 12, dadurch gekennzeichnet, daß die Wurfschaufeln (102) mit Hebeln (108) versehen sind, die jeweils eine Rolle (109) tragen, die längs einer gestellfesten Führung (116) abrollt, wobei die Wurfschaufeln mittels Federn (106) vorgespannt sind.

14. Mähdrescher nach einem der vorhergehenden Ansprüche, dadurch gekennzeichnet, daß die Wurfschaufeln (102) in Seitenansicht gebogen, geknickt konkav und konvex oder in Draufsicht halbkreisförmig (70), halbkreisförmig mit unterschiedlich langen Schenkeln (71), doppelhalbkreisförmig, doppelhalbkreisförmig mit unterschiedlich langen Schenkeln (72), gekantet (73, 77), U-förmig (74), U-förmig mit ungleich langen Schenkeln (75) oder doppel-U-förmig gestaltet sind.

15. Mähdrescher nach einem der Ansprüche 11 bis 14, dadurch gekennzeichnet, daß die Wurfschaufeln (110) durch einen gestellfesten Anschlag (113) auslenkbar sind.

16. Mähdrescher nach Anspruch 15, dadurch gekennzeichnet, daß der gestellfeste Anschlag (113) in der Höhe verstellbar ist.

17. Mähdrescher nach einem der Ansprüche 11 bis 16, dadurch gekennzeichnet, daß die Wurfschaufeln (114) mit dem Zugmittel undrehbar verbunden sind und durch einen, vorzugsweise höhenverstellbaren, Anschlag (115) auslenkbar sind.

## Claims

1. A combine harvester with short straw and grain sieves (26) or short straw and grain sieves as well as a straw walker (25), and an attachment for distribution of the short straw and the chaff blown away from the short straw and grain sieves (26), the attachment having an endless flexible traction means (11) which is arranged transversely with respect to the direction of travel of the combine harvester and which can circulate around drive and direction-changing rollers (7, 8) and which is provided with blades (12) disposed substantially perpendicularly on the traction bans and facing outwardly and arranged at spacings from each other and fixedly or releasably connected to the traction means (11), characterized in that the frame (3, 4) which mounts the drive and direction-changing rollers (7, 8) is arranged in the direction of travel of the combine harvester behind the short straw and grain sieves (26) beneath the straw walker (25) if provided and that arranged in a distributed array over the length of the endless flexible traction means (11) between same and the short straw and grain sieves (26) in juxtaposed relationship are a plurality of adjustable air baffle plates (20, 21) with which the flow of air that is loaded with the chaff and the short straw can be fed on one side of the attachment to the blades (12) of the upper run of the traction means (11) and on the other side to the blades (12) of the lower run of the traction means (11).

2. A combine harvester according to claim 1 characterised in that the attachment can be shielded by a striker plate (60) behind the traction means (11) and/or the blades (12) in the direction of travel of the combine harvester.

3. A combine harvester according to claim 2 characterised in that the lower portion (61) of the striker plate (60) is adapted to be pivoted.

4. A combine harvester as set forth in the classifying portion of claim 1 characterised in that provided in substantially one plane are two flexible traction means (28, 29) which can each circulate in opposite directions about drive and direction-changing rollers and which are provided with blades (12), and that arranged over the length of the two endless traction means (28, 29) between same and the sieves (26) are one or more adjustable air baffle plates (20) with which the flow of air loaded with chaff and the short straw can be fed to the blades (12) respectively only to the upper or the lower run of the endless traction means (28, 29).

5. A combine harvester according to claim 4 characterised in that the spacing between the axes of the drive and the direction-changing rollers of the two endless traction means (28, 29) is different.

6. A combine harvester according to claim 4 or claim 5 characterised in that the outer rollers are mounted pivotably about the centre point of the associated inner rollers.

7. A combine harvester according to one of claims 4 to 6 characterised in that two adjustable air guide flaps (35, 36) are provided in the direction of travel of the combine harvester laterally of the traction means (28, 29).

8. A combine harvester according to one of the preceding claims characterised in that the air baffle plates (20, 21) are fixed to supports or support arms (17, 18) which are mounted pivotably and fixably about transversely disposed horizontal axes (16), that the front end regions of the air baffle plates (20, 21) are mounted to the free ends of the support arms (17, 18) which are towards the short straw and grain sieves (26) in such a way as to be pivotable about axes (19) which are parallel to the front edges of the air baffle plates, and that pivotably mounted to the respective support arms (17, 18) are two air baffle plates (20, 21) which enclose the support arms between them and the outer guide surfaces of which extend parallel to each other or at an acute angle relative to each other.

9. A combine harvester according to one of the preceding claims characterised in that the support arms (17, 18) are adjustable in respect of their length, that the support arms comprise telescopic tubes (17, 18) which can be braced to each other, or other technical components which permit lengthwise displacement, and that the pivot points (16) of the support arms (17, 18) are adjustable in the vertical and horizontal directions.

10. A combine harvester according to one of the preceding claims characterised in that the support arms (17, 18) are fixed to the frame (3, 4) of the endless traction means (11).

11. A combine harvester according to one of the preceding claims characterised in that throwing blades (102) are mounted on the traction means (101).

12. A combine harvester according to claim 11 characterised in that the throwing blades (102) are mounted in hinges (105) fixed to the traction means and/or rotatably about one or more axes or steplessly rotatably in a ball joint.

13. A combine harvester according to claim 11 or claim 12 characterised in that the throwing blades (102) are provided with levers (108) which each carry a roller (109) which rolls along against a guide (116) which is fixed with respect to the frame structure, wherein the throwing blades are prestressed by means of springs (106).

14. A combine harvester according to one of the preceding claims characterised in that the throwing blades (102) are in side view bent, or concavely and convexly kinked or in plan view are semicircular (70), semicircular with limbs (71) of different lengths, of a double semicircular configuration, of a double semicircular configuration with limbs (72) of different lengths, of a bent configuration (73, 77), U-shaped (74), U-shaped with limbs (75) of unequal lengths, or of a double-U-shaped configuration.

15. A combine harvester according to one of claims 11 to 14 characterised in that the throwing blades (110) can be deflected by an abutment (113) which is fixed with respect to the frame structure.

16. A combine harvester according to claim 15 characterised in that the abutment (113) which is fixed with respect to the frame structure is adjustable in respect of height.

17. A combine harvester according to one of claims 11 to 16 characterised in that the throwing blades (114) are non-rotatably connected to the traction means and can be deflected by an abutment (115) which is preferably adjustable in respect of height.

**Revendications**

1. Moissonneuse-batteuse avec des tamis pour menues-pailles et pour grains (26) ou tamis pour menues-pailles et pour grains ainsi qu'un secoueur de paille (25) et avec un dispositif accessoire épandeur des balles et des mêmes menues-pailles, évacuées par soufflage des tamis pour menues-pailles et grains (26), qui comprend un moyen de traction (11) flexible, sans fin, qui est susceptible de tourner en passant sur des rouleaux d'entraînement et de renvoi (7, 8), disposé perpendiculairement au sens de déplacement de la moissonneuse-batteuse et pourvue de pales ou aubes (12) reliées fixement ou amoviblement au moyen de traction(11) et placées debout sensiblement perpendiculairement sur celui-ci, à une certaine distance les unes des autres et orientées vers l'extérieur,

caractérisée,

en ce que le cadre (3, 4) logeant les rouleaux d'entraînement et de renvoi (7, 8) est disposé dans le sens du déplacement de la moissoneuse-batteuse derrière les tamis pour menues-pailles et grains (26), en-dessous du secoueur de paille (25), si présent, et en ce que plusieurs tôles chicanes (20, 21) ajustables sont disposées, les unes à côté des autres en étant réparties sur la longueur du moyen de traction flexible sans fin (11), entre celui-ci et les tamis pour menues-pailles et grains (26), à l'aide desquels le courant où l'écoulement d'air chargé de balles et de menue-pailles peut être amené sur un côté du dispositif accessoire aux aubes (12) du brin supérieur et sur l'autre côté aux aubes (12) du brin inférieur du moyen de traction (11).

2. Moissoneuse-batteuse selon la revendication 1, caractérisée en ce que le dispositif accessoire est susceptible d'être blindé par une tôle d'arrêt ou de butée (60) dans le sens du déplacement de la moissoneuse-batteuse, en arrière du moyen de traction (11) et/ou des aubes (12).

3. Moissoneuse-batteuse selon la revendication 2 caractérisée en ce que la partie inférieure (61) de la tôle de butée (60) est configurée pour être rabattable.

4. Moissoneuse-batteuse selon le préambule de la revendication 1,

caractérisée,

en ce que deux moyens de traction flexible (28, 29) sont prévus, qui tournent sensiblement dans un plan chacun autour de rouleaux d'entraînement et de renvoi, dans des sens opposés et sont pourvus d'aubes (12), et qu'une ou plusieurs tôles chicanes (20) sont disposées sur la longueur des deux moyens de traction sans fin (28, 29) entre ceux-ci et les tamis (26), a l'aide desquelles le courant d'air chargé de balles et de menues-pailles peut être amené aux aubes (12) respectivement seulement au brin supérieur ou au brin inférieur des moyens de traction sans fin (28, 29).

5. Moissoneuse-batteuse selon la revendication 4, caractérisée en ce que l'entraxe des rouleaux d'entraînement et de renvoi des deux moyens de traction sans fin (28, 29) est différemment important.

6. Moissoneuse-batteuse selon les revendications 4 ou 5, caractérisée en ce que les rouleaux extérieurs sont montés pivotants autour du point central des rouleaux intérieurs associés.

7. Moissoneuse-batteuse selon l'une des revendications 4 à 6, caractérisée en ce que deux volets chicanes (35, 36) ajustables sont prévus dans le sens du déplacement de la moissoneuse-batteuse, latéralement des moyens de traction (28, 29).

8. Moissoneuse-batteuse selon l'une des revendications précédentes, caractérisée en ce que les tôles chicanes (20, 21) sont fixées à des supports ou à des bras porteurs (17, 18), qui sont montés pivotants autour d'axes (16) horizontaux et perpendiculaires et supportés de façon immobilisable, que les zones d'extrémité avant des tôles chicanes (20, 21) sont montés pivotants aux extrémités libres et tournées vers les tamis pour menues-pailles et grains (26), des bras porteurs (17, 18), autour d'axes (19) parallèles aux arêtes frontales des tôles chicanes, et en ce que sur les bras porteurs (17, 18) sont montés pivotants respectivement deux tôles chicanes (20, 21) qui enferment entre eux ces bras porteurs et dont les surfaces chicanes extérieures s'étendent parallèlement ou sous un angle aigu, l'une par rapport à l'autre.

9. Moissoneuse-batteuse selon l'une des revendications précédentes, caractérisée en ce que les bras porteurs (17, 18), sont réalisés de façon à être réglables en longueur, que les bras porteurs sont formés par des tubes (17, 18) télescopiques et susceptibles d'être assemblés sous tension, ou par d'autres éléments de construction techniques quelconques, qui permettent un déplacement longitudinal, et en ce que les points de pivotement (16) des bras porteurs (17, 18) sont réglables dans des directions verticale et horizontale.

10. Moissoneuse-batteuse selon l'une des deux revendications précédentes, caractérisée en ce que les bras porteurs (17, 18) sont fixés au bâti (3, 4) du moyen de traction sans fin (11).

11. Moissoneuse-batteuse selon l'une des revendications précédentes, caractérisée en ce que des aubes de projection sont placées sur le moyen de traction (101).

12. Moissoneuse-batteuse selon la revendication 11 caractérisée en ce que les aubes de projection (102) sont articulées à des charnières (105) fixées au moyen de traction, et/ou de façon rotative autour d'un ou de plusieurs axes, ou de façon rotative sans discontinuité à un joint à rotule.

13. Moissoneuse-batteuse selon la revendication 11 ou 12, caractérisée en ce que les aubes de projection (102) sont pourvues de levier (108) qui portent chacun un rouleau (109) roulant le long d'un guidage (116) solidaire du chassis, les aubes de projection étant précontraints à l'aide de ressorts (106).

14. Moissoneuse-batteuse selon l'une des revendications précédentes, caractérisée en ce que les aubes de projection (102) sont configurées de façon à être, dans une vue latérale, courbes, coudées et concaves et convexes ou à présenter dans une vue de dessus la forme d'un demi-cercle (70), la forme d'un demi-cercle avec des branches (71) différemment longues, la forme d'un double demi-cercle, la forme d'un double demi-cercle avec des branches différemment longues (72), une forme pliée à vive arête (73, 77), la forme d'un U (74), la forme d'un U avec des branches différemment longues (75) ou la forme d'un double U.

15. Moissoneuse-batteuse selon l'une des deux revendications 11 à 14, caractérisée en ce que les aubes de projection (110) sont susceptibles d'être déviées à l'aide d'une butée (113) solidaire du chassis.

16. Moissoneuse-batteuse selon la revendication 15, caractérisée en ce que la butée (113) solidaire du chassis est réglable en hauteur.

17. Moissoneuse-batteuse selon l'une des revendications 11 à 16, caractérisée en ce que les aubes ou pales de projection (114) sont reliés, de façon immobile en rotation, au moyen de traction et peuvent être déviées par l'intermédiaire ad'une butée (115) de préférence réglable en hauteur.

9

Fig.1

Fig. 2

EP 0 230 261 B1

**Fig. 4**

12
15
20
7,8
18
17
13  3
4
A

**Fig. 3**

35
12
12
36
28
29

Fig.5

Fig.6

EP 0 230 261 B1

Fig.7a

Fig.7b

Fig.7c

Fig.8a

Fig.8b

Fig.9a

Fig.10

Fig.9b

14

Fig.11

Fig.12

Fig.13

Fig. 14a

Fig. 14b

EP 0 230 261 B1